# EUROPEAN PATENT APPLICATION

(11) **EP 0 836 837 A1**
(43) Date of publication of application: **22.04.1998**
(21) Application number: 97109130.1
(22) Date of filing: 24.07.1992
(51) Int. Cl.: A61C 15/00, A61K 7/16, A61C 15/04

(54) **Improved flavored dental floss**

(30) Priority: 01.08.1991 US 740824
(62) Divisional of application: 92916922.5
(71) Applicant: GILLETTE CANADA INC., Kirkland, Quebec H9H 4Y8 (CA)
(72) Inventor: Suhonen, Christopher H., San José, CA 95125 (US); Kaminski, John A., Newark, CA 94560 (US)
(74) Representative: Baillie, Iain Cameron

(57) **Abstract**

A flavored interproximal dental cleaning article comprising a substrate material formed into a thread or tape having a flavored coating, the flavoring in the coating consisting essentially of flavoring oil and xylitol. Optionally this article has an outer coating comprising a major amount of polyethylene glycol having an average molecular weight at least 7000 daltons and including an amount of a further substance sufficient to provide a coating composition having a metal temperature within the temperature range of from 50 to 65°C and which is solid at a temperature below 50°C.

## Description

This invention relates to an improved, flavored, waxed dental floss having a flattened cross-section and a highly flavored coating for cleaning the interproximal surfaces of teeth.

Tooth decay and dental disease can be caused by bacterial action resulting from the formation of plaque about the teeth and/or the entrapment of food particles between the teeth and interstices therebetween. The removal of plaque and entrapped food particles reduces the incidence of caries, gingivitis, and mouth odors as well as generally improving oral hygiene. Conventional brushing has been found to be inadequate for removing all entrapped food particles and plaque. To supplement brushing, dental flosses and tapes have been recommended. The term "dental floss", as used herein, is defined to include both dental flosses, dental tapes and any similar article.

Dental flosses made of multiple filaments twisted to form a thread and coated with microcrystalline waxes to prevent fraying during manufacture and use are well-known. Sliding circular cross-sectioned flosses between closely spaced teeth in the scraping cleaning action is sometimes difficult.

Flavoring flosses by adding flavoring oils to a wax coating mixture is also known. However, the wax coating mixtures must be heated to temperatures of around 80°C or higher to provide a viscosity suitable for coating floss. The flavoring oils vaporize and rapidly oxidize at these high temperatures, producing flosses with odors but little residual taste of the original flavoring oils, even when excess amounts of flavoring oils are added to the coating mixture. Furthermore, the residual flavors remaining in the coating are degraded and bitter, not the fresh flavors desired.

Concentrated flavoring oils must be combined with sweeteners to provide palatable flavors. Conventional polysaccharides used as sweeteners promote caries forming bacteria.

In accordance with the present invention these is provided. A flavored interproximal dental cleaning article comprising a substrate material formed into a thread or tape having a flavored coating, the flavoring in the coating consisting essentially of flavoring oil and xylitol.

A process for making a flattened, highly flavored interproximal dental cleaning article of this invention comprises first coating a plurality of filaments of a substrate material formed into a larger thread with a first liquid or semi-solid wax composition having a temperature above 60°C. The coating is cooled to a temperature at which the first wax composition has solidified, and the thread is flattened. The flattened thread is then coated with a second liquid or semi-solid wax composition having a temperature less than the melting temperature of the first wax composition, the wax composition containing a volatile flavoring oil. The second wax composition is then solidified to form a flattened, highly flavored dental cleaning article.

Preferably, the outer or second wax composition comprises polyethylene glycol and the inner or first wax composition is a microcrystalline wax. The outer wax composition can comprise a major amount of a waxy polyethylene glycol having an average molecular weight of at least 7000 daltons and a lower molecular weight material compatible therewith. The amount of the lower molecular weight material is sufficient to provide a coating composition having a melting temperature within the temperature range of from 50 to 65°C and which is solid at a temperature below 50°C. Preferably, the outer wax composition contains from 20 to 70 wt.% of waxy polyethylene glycol having an average molecular weight of at least 7000 daltons and from 1 to 40 wt.% amount of a liquid polyethylene glycol or an emulsifying wax comprising a fatty acid ester. Optimally the outer wax composition contains liquid polyethylene glycol.

A flattened, interproximal dental cleaning article of this invention comprises a plurality of filaments of a substrate material formed into a twisted thread, coated with a solid waxy composition which is a solid at temperatures below about 50°C and preferably below about 60° C, and flattened to have a width to thickness ratio of at least 2:1 and preferably at least 4:1.

A process for preparing a flattened, twisted dental cleaning article of this invention comprises coating a plurality of filaments formed into a larger, twisted thread with a liquid or semi-solid wax composition which is solid at temperatures below about 50°C and preferably below about 60°C; cooling the coating to a temperature at which the coating is solid; and flattening the thread to a width to thickness ratio of at least 2:1 and preferably at least 4:1.

A preferred flavored interproximal dental cleaning article of this invention
comprises a substrate material formed into a thread or tape having a flavored coating, the flavoring in the coating consisting essentially of flavoring oil and xylitol.
Fig. 1 is a cross-sectional representation of an intermediate thread formed according to this invention with a first wax coating.
Fig. 2 is a cross-sectional representation of the flattened floss product of this invention, having a coating.
Fig. 3 is a cross-sectional representation of the flattened floss of Fig. 2, coated with an outer flavored coating.
Fig. 4 is a schematic representation of a manufacturing process for the article of this invention.

The dental cleaning article of this invention is a wax coated, highly flavored floss having a flattened configuration. It is made by a process which uses a high melting temperature wax coating to maintain a flattened floss configuration and an outer low temperature melting highly flavored waxy composition to provide a highly flavored coating without significantly disturbing the integrity of the primary wax coating or the flattened configuration of the floss.

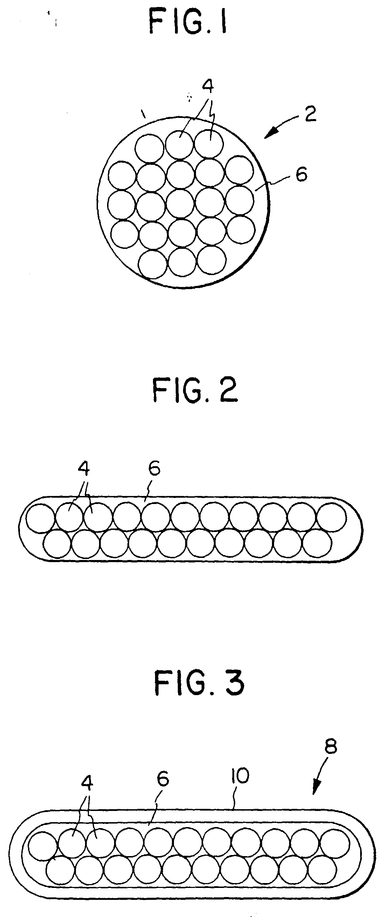

Fig. 1 shows a cross-sectional representation of an intermediate thread 2 formed according to this invention with a first coating. The filaments 4 are bundled and preferably twisted into a thread, and coated with a primary coating 6.

The filaments are the substrate materials of the floss article. Suitable substrate filament materials include high and normal tenacity nylon such as nylon 6 and 66, rayon, Dacron, acetate polymers, polypropylene and the like as well as cotton, wool, silk, linen and other staple fibers. A plurality of individual filaments are formed together to give a larger thread having a sufficiently small diameter to permit insertion between the teeth. The preferred filaments are nylon, the filaments being twisted or otherwise woven together to make a non-fraying thread.

The inner or primary coating 6 is formed from a wax. Suitable waxes for this coating are preferably white or colorless and are solid at temperatures below 75°C and preferably temperatures at or below 65°C. Suitable waxes include beeswax, paraffin and microcrystalline waxes, polyethylene glycols, wax-like resins and polymers, and mixtures thereof. They must remain sufficiently hard at the temperature of a secondary coating bath (50 to 65°C) to retain the thread in a flattened configuration as will be explained in greater detail hereinafter.

Fig. 3 is a cross-sectional representation of the flattened, flavored final floss product 8 of this invention. The floss 8 has been flattened and has an approximate width of from 0.5 to 2 mm and preferably from 0.7 to 1.4 mm, a thickness of from 0.1 to 0.4 mm, and a width to thickness ratio of from above 2:1 and preferably at least 4:1.

Fig. 3 is the flattened floss of Fig. 2 with a outer flavored coating 10. The final floss product can have a weight suitable for flossing, for example, from 600 for thinner, narrower flosses to 1500 denier for thicker and wider flosses.

The outer or secondary flavored coating 10 is formed from a wax composition having a melting point below the melting point of the primary coating and a viscosity suitable for coating at the temperature of the secondary coating bath. It is preferably specially formulated with lower melting materials to provide the consistency, lubrication, and flexibility required for a non-flaking waxed dental floss. The outer or secondary flavored coating must be a liquid at temperatures of from 50 to 65°C and be solid at temperatures below about 50°C.

The outer coating 10 is preferably formulated from a mixture of higher melting polyethylene glycol and a lower melting point emulsifying or solubilizing material compatible therewith. The lower melting point emulsifying material is selected and proportioned to provide the desired melting point but to yield a product which is solid at temperatures below 50°C. Preferably, the lower melting material softens the coating, increases its flexibility to reduce flaking, and increases the pliability of the coating.

A preferred outer coating mixture contains a major portion of a higher molecular weight polyethylene glycol and sufficient amounts of lower molecular weight, compatible compounds to yield a solid at temperatures below 50°C and a liquid at temperatures of 50 to 65°C. Optimum mixtures are formulated with polyethylene glycols having a molecular weight of at least 7000 (PEG 8000 and Compound 20M, CARBOWAX®, Union Carbide) which is solid at temperatures below 60°C mixed with lower melting materials having lower melting points, preferably of less than 30°C. Preferred low melting additives include liquid polyethylene glycols having molecular weight of less than 1000 daltons, optimally from 200 to 1000 daltons, and more complex emulsifying waxes such as PEG-40 sorbitan diisostearate (EMSORB 2726® PEG-40 sorbitan diisostearate, Henkel Corporation).

One preferred second coating wax composition comprises waxy polyethylene glycol having an average molecular weight from 7000 to 9000 daltons and an amount of an emulsifying wax comprising a fatty acid ester sufficient to provide melting and solidification temperatures in the desired rages. The second wax composition can contain from 20 to 70 wt.% of waxy polyethylene glycol having an average molecular weight from 3000 to 20,000 daltons and from 1 to 40 wt.% emulsifying wax, for example.

The optimum second coating wax composition comprises waxy polyethylene glycol having an average molecular weight from 7000 to 9000 daltons and an amount of a liquid polyethylene glycol having a molecular weight of less than 1000 daltons to provide melting and solidification temperatures in the desired ranges. The second wax composition can contain from 20 to 70 wt.% of waxy polyethylene glycol having an average molecular weight from 3000 to 20,000 daltons and from 1 to 40 wt.% of a liquid polyethylene glycol such as polyethylene glycol having a molecular weight of 400 daltons (PEG 8), for example.

The outer coating also contains conventional flavoring materials such as flavoring oils and sweetening agents. Suitable flavors include peppermint, spearmint, wintergreen, cassia, cinnamon, menthol and the like; and fruit flavors such as cherry, strawberry, lime, and the like. Preferred sweeteners are high strength sweeteners such as saccharin, cyclamates, aspartame, xylitol and the like. The optimum sweetener is xylitol because it is a natural sugar useful in anticaries preparations.

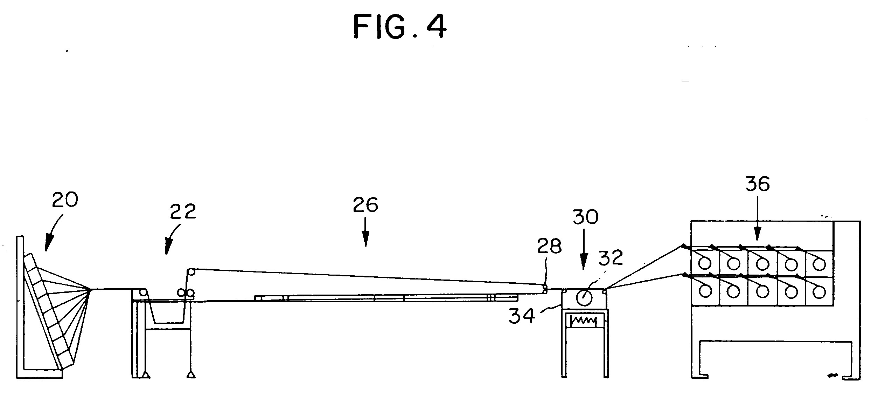

Fig. 4 is a schematic representation of the manufacturing process adaptable to manufacturing the article of this invention. Uncoated, twisted threads are stored on creel system 20. Threads from individual creels are drawn through a hot wax applicator bath 22 where the first coating is applied and rollers 24 where the excess coating is removed. The hot wax applicator bath 22 is preferably a jacketed, constant temperature bath of a microcrystalline wax having a temperature of about 60°C, preferably above
70°C and optimally 75-85°C. The coated threads are then cooled as they pass through zone 26 to a soil solid, yielding the intermediate coated thread of Fig. 1. The threads are then flattened for example, by passing them between rollers 28 spaced to provide the desired thickness, the primary coating material retaining the thread in the flattened configuration as shown in Fig. 2.

The flattened threads are then passes through the secondary coating station 30 where a secondary coating is applied, for example with a lick roller 32 immersed in the flavored coating composition in the jacketed heated bath 34. The flattened threads pass over the top of the roller, coating the threads with the coating material. The outer coating is then solidified, yielding the flattened flosses of Fig. 3. The flattened flosses are then wound onto creels 36. The creels are transferred to a bobbin winding machine (not shown) where the flattened, flavored flosses are wound onto bobbins..

The invention is further shown by the following examples.

### EXAMPLE 1

A preferred secondary coating formulation is prepared as follows: To a 6 liter pot, polyethylene glycol having a molecular weight of approximately 8000 (2200 g, PEG 8000) is heated until liquified and cooled to 65°C.

In a second vessel, sorbitol (100 g, 70% USP) is heated and mixed with sodium saccharin (25 g).

In a third vessel, the flavor components (1925 g, NOVILLE) are prepared. Peppermint and spearmint flavors are mixed, and menthol is added and stirred until dissolved. PEG 40 Sorbitan diisostearate (750 g, EMSORB 2726® PEG-40 sorbitan diisostearate, Henkel Corporation) plasticizer and the contents of the second vessel are then added and mixed until homogeneous. This mixture is then mixed with the contents of the 6 liter pot.

The resulting mixture is maintained at a wax bath temperature of 50 to 65°C and applied to the threads as a secondary coating.

### EXAMPLE 2

Following procedures according to Example 1, flattened floss coated with a primary coating of microcrystalline wax was coated with the following composition using polyethylene glycol 400 (PEG 8) as a melting point depressant in polyethylene glycol 8000 (PEG 8000) wax. The coated products exhibited improved flaking properties, that is, exhibited less flaking than the product of Example 1.

| Component | Concentration | |
|---|---|---|
| | Weight Percent | Per 5 Kg |
| Saccharin | 0.70 | 35 g |
| Ethanol (190/200 proof) | 2.00 | 100 g |
| NOVILLE Dental Flavor | 38.50 | 1925 g |
| PEG 8 | 15.00 | 750 g |
| PEG 8000 | 43.80 | 2190 g |

### EXAMPLE 3

Following procedures according to Example 1, flattened floss coated with a primary coating of microcrystalline wax was coated with the following composition using polyethylene glycol 400 (PEG 8) as a melting point depressant in polyethylene glycol 8000 (PEG 8000) wax. The coated products exhibited improved flaking properties, that is, exhibited less flaking than the product of Example 1.

| Component | Concentration | |
|---|---|---|
| | Weight Percent | Per 5 Kg |
| Xylitol | 5.00 | 250 g |
| Ethanol (190/200 proof) | 2.00 | 100 g |
| Water | 2.00 | 100 g |
| NOVILLE Dental Flavor | 35.00 | 1750 g |
| PEG 8 | 14.00 | 700 g |
| PEG 8000 | 42.00 | 2100 g |

### EXAMPLE 4

Following procedures according to Example 1, flattened floss coated with a primary coating of microcrystalline wax was coated with the following composition using polyethylene glycol 400 (PEG 8) as a melting point depressant in polyethylene glycol 8000 (PEG 8000) wax. The coated products exhibited improved flaking properties, that is, exhibited less flaking than the product of Example 1.

| Component | Concentration | |
|---|---|---|
| | Weight Percent | Per 5 Kg |
| Cyclamate | 5.00 | 250 g |
| Ethanol (190/200 proof) | 2.00 | 100 g |
| Water | 2.00 | 100 g |
| NOVILLE Dental Flavor | 35.00 | 1750 g |
| PEG 8 | 14.00 | 700 g |
| PEG 8000 | 42.00 | 2100 g |

## Claims

1. A flavored interproximal dental cleaning article comprising a substrate material formed into a thread or tape having a flavored coating, the flavoring in the coating consisting essentially of flavoring oil and xylitol.

2. A article according to claim 1, wherein the flavored coating comprises a wax.

3. An article according to claim 1, having a outer coating comprising a major amount of polyethylene glycol having an average molecular weight at least 7000 daltons and including an amount of a further substance sufficient to provide a coating composition having a melting temperature within the temperature range of from 50 to 65°C and which is solid at a temperature below 50°C.

4. An article according to claim 3, wherein said farther substance is a lower molecular weight material compatible therewith.

5. An article according to claim 3, wherein said farther substance is a lower molecular weight material which is an emulsifying wax or a liquid polyethylene glycol.

6. An article according to claim 3, wherein said further substance is a lower molecular weight material which is a liquid polyethylene glycol having a molecular weight of less than 1000 daltons.
